# EUROPÄISCHE PATENTSCHRIFT

(11) **EP 2 637 270 B1**
(45) Veröffentlichungstag und Bekanntmachung des Hinweises auf die Patenterteilung: **24.06.2015**
(21) Anmeldenummer: 12194548.9
(22) Anmeldetag: 28.11.2012
(51) Int. Cl.: H02B 1/36, H02B 11/133

(54) **Einschubrahmen für ein elektrisches Einschubschaltgerät, insbesondere ein Einschubleistungsschalter**
Withdrawable frame for a withdrawable switching device, in particular a withdrawable power switch
Cadre amovible pour un appareil de commutation électrique enfichable, notamment un disjoncteur enfichable

(30) Priorität: 06.03.2012 DE 102012203469
(43) Veröffentlichungstag der Anmeldung: 11.09.2013
(73) Patentinhaber: Siemens Aktiengesellschaft, 80333 München (DE)
(72) Erfinder: Dostal, Ladislav, 56401 Zamberk (CZ); Jerabek, Lukas, 56401 Zamberk (CZ)

(56) Entgegenhaltungen:
- EP-A1- 1 693 938
- EP-A1- 2 423 933
- WO-A2-01/71869
- WO-A2-2004/040726
- DE-A1- 4 331 778
- DE-C1- 4 420 580

## Beschreibung

Elektrische Schaltgeräte, wie Leistungsschalter, haben die Aufgabe, einen oder eine Anzahl von Verbrauchern von einem Spannungsversorgungsnetz abzukoppeln, wenn eine bestimmte Störung auftritt. Die klassische Störung ist das Auftreten eines Kurzschlussstroms, und die Leistungsschalter sind herkömmlicherweise dazu ausgelegt, bei einem solchen Kurzschlussstrom ein Schaltglied zu bewegen und so die Verbindung zwischen Verbrauchern und Spannungsversorgungsnetz zu entkoppeln.

Die Erfindung bezieht sich auf Einschubrahmen für elektrische Einschubschaltgeräte, insbesondere auf Einschubleistungsschalter im Niederspannungsbereich. Mit "Niederspannung" sind typischerweise Spannungen von bis ca. 2000 Volt gemeint. Unter entsprechender konstruktiver Auslegung der Schalttrennstrecken können derartige Schaltgeräte auch für Schaltspannungen über 2000 Volt ausgelegt sein, wie z.B. bis 6,3 kV. Insbesondere sind derartige elektrische Einschubschaltgeräte, wie Niederspannungs-Leistungsschalter, zur Unterbrechung von Strombahnen in einem Überstromfall oder in einem Kurzschlussfall ausgebildet. Sie können einpolig oder mehrpolig, insbesondere dreipolig, ausgeführt sein.

Es ist bekannt, wie offenbart in DE-A-4 331 778, Leistungsschalter für eine einfache und schnelle Montage beziehungsweise Demontage zum Beispiel in einem Ein-schubrahmen mit einem Adaptersockel zu versehen, der meist als Steck- oder Einschubsockel ausgebildet ist. Auf diese Weise lassen sich Leistungsschalter kraftschlüssig und leicht lösbar zur Energieversorgung an die Leitungen eines elektrischen Stromversorgungsnetzes anschließen. Die Adaptersockel weisen dazu eingangsseitig und ausgangsseitig Anschlüsse auf, an welche die Leitungen der Stromversorgung und die mit elektrischer Energie zu versorgende Stromkreise mit ihren Verbrauchern angeschlossen werden. Zur elektrischen Verbindung des meist quaderförmigen Leistungsschalters mit dem Adaptersockel befinden sich an diesen zueinander korrespondierende Steckkontakte, die nach dem Aufschieben des Leistungsschalters in den Einschubrahmen ineinander gesteckt sind und so die elektrische Verbindung herstellen. Zum Ein- und Ausschalten weisen die Leistungsschalter an ihrer Vorderseite in der Regel einen manuell bedienbaren Schalthebel auf. Dabei kann für jede Gehäusegröße, beispielsweise einer Baureihe, ein Adaptersockel mit der entsprechenden Sockelgröße vorgesehen sein.

Zum Absenken und Anheben eines in einen Einschubrahmen eingeführten elektrischen Einschubschaltgerätes wird vorzugsweise eine Kurbel verwendet. Durch die Drehung der Kurbel kann das elektrische Einschubschaltgerät innerhalb des Einschubrahmens bewegt werden, um an dem Adaptersockel angeschlossen zu werden oder von diesem getrennt zu werden. Das heißt, das elektrische Einschubschaltgerät kann derart mit der Kurbel des Einschubrahmens gekoppelt werden, dass bei einer Drehung der Kurbel in eine erste Richtung das elektrische Einschubschaltgerät in den Einschubrahmen, insbesondere in Richtung des Adaptersockels, hineingezogen wird, währenddessen das elektrische Einschubschaltgerät bei der Drehung der Kurbel in eine zur ersten Richtung entgegengesetzten zweiten Richtung von dem Adaptersockel wegbewegt wird. So kann ein Einschubschaltgerät mittels der Kurbel und der Spindel in eine Verbunden-Stellung, in der es vollständig mit dem Adaptersockel, insbesondere elektrisch, verbunden ist, in eine Nicht-Verbunden-Stellung, in der das Einschubschaltgerät von dem Adaptersockel, insbesondere elektrisch, getrennt ist, und gegebenenfalls in eine Test-Stellung, die zwischen der Verbunden-Stellung und der Nicht-Verbunden-Stellung liegt, bewegt werden. In allen drei Stellungen befindet sich das Einschubschaltgerät in dem Einschubrahmen beziehungsweise ist an dem Einschubrahmen geführt. Ist das Einschubschaltgerät vollständig aus dem Einschubrahmen entfernt, so ist befindet sich der Einschubrahmen in einer Nicht-Blockiert-Stellung.

Aufgabe der Erfindung ist es, die Funktionalität und Flexibilität eines Einschubrahmens für ein elektrisches Einschubschaltgerät, insbesondere einen Einschubleistungsschalter, zu verbessern. Insbesondere soll ein Zusammenwirken mehrerer Elemente in dem Einschubrahmen geschaffen werden, durch das mehrere Funktionalitäten des Einschubrahmens sicher und einfach ausgeübt werden können.

Diese Aufgabe wird erfindungsgemäß durch einen Einschubrahmen für ein elektrisches Einschubschaltgerät mit den Merkmalen gemäß Anspruch 1 sowie durch eine Einheit aus einem Einschubrahmen und einem elektrischen Einschubschaltgerät mit den Merkmalen gemäß Anspruch 17 gelöst. Weitere Merkmale und Details der Erfindung ergeben sich aus den Unteransprüchen, der Beschreibung und den beigefügten Figuren. Dabei gelten Merkmale, die im Zusammenhang mit dem erfindungsgemäßen Einschubrahmen beschrieben sind, selbstverständlich auch im Zusammenhang mit der erfindungsgemäßen Einheit und jeweils umgekehrt, so dass bezüglich der Offenbarung zu den einzelnen Erfindungsaspekten stets wechselseitig Bezug genommen wird beziehungsweise werden kann.

Gemäß des ersten Aspektes der Erfindung wird die Aufgabe durch einen Einschubrahmen für ein elektrisches Einschubschaltgerät, insbesondere einen Einschubleistungsschalter, aufweisend einen Adaptersockel zum elektrischen Anschließen des Einschubschaltgerätes an eine Energieversorgung, wobei das Einschubschaltgerät nach dem Einschieben in den Einschubrahmen zumindest in einer Verbunden-Stellung oder einer Nicht-Verbunden-Stellung in dem Einschubrahmen gehalten werden kann, gelöst. Der Einschubrahmen weist eine Spindel zum Absenken und Anheben des Einschubschaltgerätes relativ zum Einschubrahmen auf. Ferner weist der Einschubrahmen eine Kurbel zum Betätigen der Spindel, eine erste Seitenwand zum seitlichen Halten und/oder Führen des Einschubschaltgerätes in dem Einschubrahmen, wobei die erste Seitenwand an ihrer Frontseite eine Kurbelöffnung zur Durchführung der Kurbel durch die erste Seitenwand zu der Spindel aufweist, auf. Der Einschubrahmen ist ferner dadurch gekennzeichnet, dass eine Führungskulisse vorgesehen ist, die innerhalb der ersten Seitenwand zwischen einer Arretierposition und einer Nicht-Arretierposition beweglich gelagert ist, wobei die Führungskulisse zu beweglichen Lagerung von wenigstens zwei Schaltaktoren ausgebildet ist. Ferner ist ein Entarretierhebel innerhalb der ersten Seitenwand zwischen einer Ausgangsposition und einer Endposition beweglich gelagert angeordnet, der durch die Kurbel, die durch die Kurbelöffnung in das Innere der ersten Seitenwand einführbar ist, zur Überführung der Führungskulisse von der Arretierposition in die Nicht-Arretierposition betätigt werden kann. Der Entarretierhebel ist dabei derart ausgebildet und mit der Führungskulisse in Wirkkontakt bringbar, dass nach der Überführung der Führungskulisse in die Nicht-Arretierposition der Entarretierhebel in eine Endposition bewegt wird und nach dem Entfernen der Kurbel aus dem Inneren der ersten Seitenwand der Entarretierhebel automatisch zurück in die Ausgangsposition zurück bewegt wird.

Ein derart ausgebildeter Einschubrahmen weist eine hohe Funktionalität und Flexibilität auf. Insbesondere ermöglicht ein derartig ausgebildeter Einschubrahmen auf eine einfache Art und Weise, dass die Führungskulisse, an der die Schaltaktoren beweglich gehalten sind, aus der Arretierposition in die Nicht-Arretierposition zurück bewegt werden kann. Die Arretierposition der Führungskulisse ist dadurch definiert, dass in dieser Arretierposition einer der Schaltaktoren in Eingriff mit einer Anzeigeeinrichtung des Einschubrahmens gelangen kann, um so die Stellung eines in dem Einschubrahmen eingeführten Einschubschaltgerätes anzuzeigen. In der Nicht-Arretierposition der Führungskulisse sind durch die Bewegung der Führungskulisse die Schaltaktoren derart bewegt, dass diese nicht mehr in Eingriff mit der Anzeigeeinrichtung des Einschubrahmens stehen. In der Nicht-Arretierposition befindet sich die Führungskulisse sozusagen in einer Ausgangsposition, in der ein Einschubschaltgerät in den Einschubrahmen eingeführt werden kann. Erreicht das Einschubschaltgerät die Nicht-Verbunden-Stellung, kann dies durch den erfindungsgemäβen Einschubrahmen angezeigt werden. Gleiches gilt für das Erreichen der Verbunden-Stellung des Einschubschaltgerätes beziehungsweise des Einschubrahmens. Auch dies kann durch den Einschubrahmen, insbesondere durch die Anzeigeeinrichtung des Einschubrahmens, angezeigt werden. Ebenso kann eine Test-Stellung angezeigt werden, wobei sich die Test-Stellung zwischen der Verbunden-Stellung und der Nicht-Verbunden-Stellung befindet.

Die Führungskulisse ist innerhalb der ersten Seitenwand zwischen der Arretierposition und der Nicht-Arretierposition beweglich gelagert. Insbesondere ist die Führungskulisse linear beweglich innerhalb der ersten Seitenwand gelagert. An der Führungskulisse sind wenigstens zwei Schaltaktoren beweglich gelagert. Ferner ist ein Entarretierhebel innerhalb der ersten Seitenwand angeordnet. Dieser Entarretierhebel ist zwischen einer Ausgangsposition und einer Endposition beweglich, insbesondere dreh- und/oder schwenkbeweglich gelagert. Dieser Entarretierhebel ist derart gelagert, dass dieser bei der Einführung der Kurbel in die Kurbelöffnung durch die Kurbel betätigt, das heißt bewegt, insbesondere verdreht, werden kann. Bei der Bewegung des Entarretierhebels von der Ausgangsposition in die Endposition überführt der Entarretierhebel die Führungskulisse von der Arretierposition in die Nicht-Arretierposition. Das heißt, der Entarretierhebel ist derart mit der Führungskulisse gekoppelt, so dass bei einer Bewegung des Entarretierhebels von der Ausgangsposition in die Endposition die Führungskulisse von der Arretierposition in die Nicht-Arretierposition überführt wird. Das heißt, in der Nicht-Arretierposition der Führungskulisse befindet sich der Entarretierhebel auf den Weg in seine Endposition. Der Entarretierhebel ist derart ausgebildet und mit der Führungskulisse in Wirkkontakt bringbar, dass nach der Überführung der Führungskulisse in die Nicht-Arretierposition und anschließend einer Weiterbewegung des Entarretierhebels in seine Endposition, der Entarretierhebel automatisch zurück in seine Ausgangsposition bewegt werden kann. Die Nicht-Arretierposition der Führungskulisse wird eher erreicht, als die Endposition des Entarretierhebels. Das heißt, die Nicht-Arretierposition der Führungskulisse ist ungefähr dann erreicht, wenn der Entarretierhebel kurz vor seiner Endposition steht. Das Zurückführen des Entarretierhebels in seine Ausgangsposition erfolgt, wenn der Entarretierhebel in der Endposition durch Entfernen der Kurbel aus dem Inneren der ersten Seitenwand nicht mehr mit der Kurbel in Kontakt steht. Das heißt, solange sich die Kurbel in dem Inneren der ersten Seitenwand befindet und in Kontakt zu dem Entarretierhebel steht, verharrt der Entarretierhebel in der Endposition. Nach dem Entfernen der Kurbel bewegt sich der Entarretierhebel aufgrund seiner speziellen Ausgestaltung und einer Kraft, die auf ihn wirkt, zurück in seine Ausgangsposition.

Ein Vorteil bei einem derartig ausgebildeten Einschubrahmen ist, dass zur Rückführung der Führungskulisse von der Arretierposition in die Nicht-Arretierposition kein zusätzlicher Schalter oder Knopf an der ersten Seitenwand, insbesondere an der Frontseite der ersten Seitenwand, angeordnet ist. Hierdurch ist der Einschubrahmen einfacher und übersichtlicher aufgebaut. Die Rückführung der Führungskulisse kann durch die Kurbel erfolgen beziehungsweise initiiert werden, die auch für das Anheben beziehungsweise Absenken des Einschubschaltgerätes innerhalb des Einschubrahmens dient. Das heißt, nach einer Einführung eines Einschubschaltgerätes in den Einschubrahmen, kann das Einschubschaltgerätes nach Einführung der Kurbel in die Kurbelöffnung bewegt werden, bis es sich in der Nicht-Verbunden-Stellung, in der Test-Stellung oder in der Verbunden-Stellung befindet. Je nach dem, in welcher Stellung sich der Einschubrahmen beziehungsweise das Einschubschaltgerät innerhalb des Einschubrahmens befindet, betätigt einer der Schaltaktoren eine Anzeigeeinrichtung des Einschubrahmens, so dass einem Betrachter die Stellung des Einschubrahmens beziehungsweise des Einschubschaltgerätes sichtbar angezeigt wird. Beim Erreichen einer der Stellungen wird die Führungskulisse aus der Nicht-Arretierposition in die Arretierposition bewegt. Der Entarretierhebel des Einschubrahmens ist derart ausgebildet, dass dieser nach dem Entfernen der Kurbel aus dem Inneren der Seitenwand und einem erneuten Einführen der Kurbel in das Innere der Seitenwand durch die Kurbel bewegt, insbesondere verschwenkt beziehungsweise verdreht, und durch diese Bewegung die Führungskulisse von der Arretierposition zurück in die Nicht-Arretierposition bewegt.

Das heißt, um die Führungskulisse zurück in eine Nicht-Arretierposition zu bewegen, muss die Kurbel aus dem Inneren der ersten Seitenwand entfernt und anschließend zurück in das Innere der Seitenwand eingeführt werden. Dort betätigt die Kurbel, insbesondere das Ende der Kurbel, den Entarretierhebel, so dass dieser durch Eingriff an der Führungskulisse diese in die Nicht-Arretierposition bewegt. In der Nicht-Arretierposition ist ein erneutes Anheben oder Absenken des Einschubschaltgerätes innerhalb des Einschubrahmens durch eine Drehung der Kurbel möglich, bis wiederum eine Stellung erreicht wird, in der das System wieder blockiert wird, das heißt die Führungskulisse in die Arretierposition überführt wird und einer der Schaltaktoren zur Anzeige der Stellung des Einschubrahmens beziehungsweise des Einschubschaltgerätes eine Anzeigeeinrichtung betätigt. Durch ein Entfernen und ein erneutes Einführen der Kurbel kann die Stellung des Einschubrahmens beziehungsweise des Einschubschaltgerätes innerhalb des Einschubrahmens erneut verändert werden, da bei der wiederholten Einführung der Kurbel in das Innere der ersten Seitenwand des Einschubrahmens die Führungskulisse und damit auch die Schaltaktoren immer wieder zurück in ihre Ausgangsposition, das heißt bei der Führungskulisse zurück in die Nicht-Arretierposition, zurückgeführt werden können.

Gemäß einer bevorzugten Weiterentwicklung der Erfindung kann bei einem Einschubrahmen vorgesehen sein, dass eine Hebelfeder vorgesehen ist, die in der Endposition des Entarretierhebels eine Kraft auf den Entarretierhebel in Richtung der Ausgangsposition ausübt. Durch diese Hebelfeder ist gewährleistet, dass der Entarretierhebel, wenn er sich in der Endposition befindet, von dem Eingriff an der Führungskulisse gelöst werden kann. Die Hebelfeder sorgt dafür, dass der Entarretierhebel von der Endposition immer automatisch zurück in seine Ausgangsposition bewegt wird, in der er erneut bei Einführung der Kurbel von dieser verdreht und/oder verschwenkt werden kann.

Bevorzugt kann bei einem Einschubrahmen vorgesehen sein, dass die Führungskulisse einen Führungsvorsprung aufweist, an den der Entarretierhebel zur Überführung der Führungskulisse von der Arretierposition in die Nicht-Arretierposition angreifen kann. Das heißt, befindet sich die Führungskulisse in der Arretierposition und wird erneut die Kurbel in das Innere der ersten Seitenwand eingeführt, greift der Entarretierhebel, insbesondere ein Anschlagarm des Entarretierhebels, an dem Führungsvorsprung der Führungskulisse an und bewegt aufgrund seiner Bewegung diesen in die Nicht-Arretierposition. Bei der Bewegung der Führungskulisse in die Nicht-Arretierposition gleitet der Anschlagarm des Entarretierhebels an dem Führungsvorsprung der Führungskulisse entlang. Der Entarretierhebel ist derart ausgebildet, dass nach dem Erreichen der Nicht-Arretierposition der Führungskulisse der Entarretierhebel, insbesondere der Anschlagarm des Entarretierhebels, an dem Führungsvorsprung der Führungskulisse entlang geführt wird, bis der Anschlagarm den Führungsvorsprung auf der anderen Seite des Führungsvorsprunges hintergreift. Vorteilhafterweise sind der Führungsvorsprung und der Entarretierhebel derart ausgebildet, dass nach dem Entfernen der Kurbel aus dem Inneren der ersten Seitenwand der Entarretierhebel, aufgrund der Kraft der Hebelfeder, an dem Führungsvorsprung zur Rückkehr in seine Ausgangsposition entlangführbar ist. Bevorzugt kann bei einem Einschubrahmen vorgesehen sein, dass der Führungsvorsprung zumindest eine Abschrägung zum Angriff des Entarretierhebels aufweist. Bevorzugt weist der Führungsvorsprung der Führungskulisse auf beiden Seiten des Führungsvorsprunges eine Abschrägung auf, die derart ausgebildet sind, dass der Entarretierhebel zum Einen nach Erreichen der Nicht-Arretierposition der Führungskulisse an dem Führungsvorsprung entlang gleiten kann, um diesen zu hintergreifen, und anschließend aufgrund der Federkraft erneut an dem Führungsvorsprung entlang gleiten kann, um in seine Ausgangsposition zurückzukehren.

Gemäß einer bevorzugten Weiterentwicklung der Erfindung kann bei einem Einschubrahmen vorgesehen sein, dass der Entarretierhebel einen Anschlag zum Anschlagen der Kurbel aufweist. Dieser Anschlag ist insbesondere als eine Anschlagfläche ausgebildet. Vorteilhafterweise ist die Anschlagfläche beziehungsweise der Anschlag derart ausgebildet, dass dieser senkrecht beziehungsweise annähernd senkrecht zu dem Entarretierhebel beziehungsweise einen Grundkörper des Entarretierhebels angeordnet ist. Der Entarretierhebel ist vorteilhafterweise um eine Drehachse innerhalb der ersten Seitenwand drehbar gelagert. Vorteilhafterweise ist der Entarretierhebel an einer Innenseite des Gehäuses der ersten Seitenwand dreh- und/oder schwenkbeweglich gelagert.

Gemäß einer besonders bevorzugten Weiterentwicklung der Erfindung kann bei einem Einschubrahmen vorgesehen sein, dass der Entarretierhebel in einer Ebene beweglich gelagert und zu der Ebene verschwenkbar beziehungsweise kippbar gehalten ist. Das heißt, zusätzlich zu der normalen Bewegung, das heißt der Verschwenkung beziehungsweise Verdrehung, des Entarretierhebels bei einer Einführung der Kurbel in den Einschubrahmen in einer Ebene, kann der Entarretierhebel aus dieser Ebene herausgeschwenkt beziehungsweise gekippt werden. Hierdurch ist besonders einfach ermöglicht, dass der Entarretierhebel nach dem Erreichen der Nicht-Arretierposition der Führungskulisse an dem Führungsvorsprung der Führungskulisse in beiden Richtungen entlang geführt werden kann.

Ferner kann bei einem Einschubrahmen vorgesehen sein, dass die Führungskulisse zum Halten der Schaltaktoren und zum Freigeben der Bewegung der Schaltaktoren ausgebildet ist, wobei jeder Schaltaktor durch ein federelastisches Element gegenüber der Führungskulisse vorgespannt ist. Bei Erreichen einer bestimmten Stellung des Einschubrahmens beziehungsweise des Einschubschaltgerätes innerhalb des Einschubrahmens können die jeweiligen Schaltaktoren durch die Kräfte der jeweiligen federelastischen Elemente bewegt werden, um die entsprechende Stellung des Einschubrahmens beziehungsweise des Einschubschaltgerätes anzuzeigen. Hierbei betätigt der entsprechenden Schaltaktor eine Anzeigeeinrichtung des Einschubrahmens, die die entsprechende Stellung des Einschubrahmens beziehungsweise des Einschubschaltgerätes einem Betrachter des Einschubrahmens sichtbar anzeigt.

Ferner kann gemäß einer vorteilhaften Weiterentwicklung der Erfindung bei einem Einschubrahmen vorgesehen sein, dass ein Halteelement beweglich gelagert innerhalb der ersten Seitenwand angeordnet ist, dass durch die Kurbel parallel zur Einführrichtung der Kurbel bewegbar ist und dass zum Halten der Führungskulisse in der Nicht-Arretierposition der Führungskulisse ausgebildet ist. Dabei ist das Halteelement derart ausgebildet, dass es bei einer Bewegung in Richtung der Einführrichtung der Kurbel die Führungskulisse freigeben kann, so dass die Führungskulisse von der Nicht-Arretierposition in die Arretierposition überführt wird. Das heißt, dass Halteelement ist zum Halten der Führungskulisse in der Nicht-Arretierposition ausgebildet, wenn keine Kurbel in die erste Seitenwand eingeführt ist. Zum Halten der Führungskulisse greift das Halteelement vorzugsweise in flexibel ausgebildete Rastelemente der Führungskulisse ein, um dieses in der Nicht-Arretierposition innerhalb der ersten Seitenwand des Einschubrahmens zu halten. Das Halteelement wird bei der Drehbewegung der Kurbel ebenfalls bewegt. Bevorzugt ist das Halteelement mit der Kurbel koppelbar, so dass dieses entsprechend der Bewegung der Kurbel bewegt wird. Die Kurbel ist vorteilhafterweise zweigeteilt, wobei ein erster Teil der Kurbel, der sogenannte eingebaute Teil, im Eingriff mit der Spindel, die in dem Einschubrahmen angeordnet ist, steht. Ein zweiter Teil der Kurbel, der sogenannte einführbare Teil, ist durch die Kurbelöffnung in das Innere der Seitenwand einführbar, um im Eingriff mit dem eingebauten Kurbelteil zu gelangen. Nach Eingriff mit dem eingebauten Teil sind die beiden Kurbelelemente derart miteinander gekoppelt, dass die Drehbewegung des einführbaren Kurbelteils auf das eingebaute Kurbelteil übertragen wird. Das heißt, durch eine Drehbewegung der Kurbel bewegt sich die Kurbel entlang der Einführrichtung der Kurbel rauf oder runter. Dabei wird das Halteelement ebenfalls rauf oder runter bewegt, wobei das Halteelement aus dem Eingriff mit den Rastelementen der Führungskulisse gelangen kann. Sobald die Rastelemente nicht mehr durch das Halteelement gehalten sind, bewegt sich die Führungskulisse aus der Nicht-Arretierposition in die Arretierposition. Hierzu kann die Führungskulisse mit einer Federkraft einer Federelementes vorgespannt sein.

Gemäß einer weiteren vorteilhaften Weiterentwicklung kann bei einem Einschubrahmen vorgesehen sein, dass ein Anschlagelement vorgesehen ist, dass zum Blockieren der Drehbewegung der Kurbel in der Arretierposition der Führungskulisse ausgebildet ist. Das heißt, geht die Führungskulisse von der Nicht-Arretierposition in die Arretierposition über, greift das Anschlagelement derart in die Kurbel ein, dass diese nicht mehr gedreht werden kann. Die Kurbel kann dann nicht mehr gedreht werden, aber vertikal aus der Kurbelöffnung heraus bewegt werden. Bei einem erneuten Einführen der Kurbel in die Kurbelöffnung beziehungsweise in das Innere der ersten Seitenwand des Einschubrahmens wird erneut der Entarretierhebel bewegt, der dadurch die Kulissenführung zurück in die Nicht-Arretierposition bewegt und gleichzeitig das Anschlagelement zurückführt. Hierdurch ist es möglich, dass nach der erneuten Einführung der Kurbel, diese wieder gedreht werden kann.

Gemäß einer weiteren bevorzugten Weiterentwicklung der Erfindung kann bei einem Einschubrahmen vorgesehen sein, dass ein Schraubelement der Kurbel und die Führungskulisse derart ausgebildet sind und in Wirkkontakt zueinander bringbar sind, dass in der Nicht-Arretierposition der Führungskulisse das Schraubelement und die Kurbel durch Nichteingriff des Anschlagelementes in das Schraubelement drehbar sind und dass in der Arretierposition der Führungskulisse das Schraubelement und die Kurbel durch Eingriff des Anschlagelementes in das Schraubelement nicht drehbar sind. Das Schraubelement ist vorteilhafterweise an dem Kurbelteil einer zweigeteilten Kurbel angeordnet, das dauerhaft in Wirkverbindung mit der Spindel steht. Das bedeutet, dass Schraubelement ist vorteilhafterweise an dem eingebauten Kurbelteil der Kurbel angeordnet. Der vertikal bewegliche Teil der zweigeteilten Kurbel, das heißt der einführbare Teil, der durch die Kurbelöffnung in das Innere des Einschubrahmens eingeführt werden kann, kann beispielsweise durch eine Imbus- oder Torxverbindung in operativem Eingriff mit dem eingebauten Kurbelteil der Kurbel gebracht werden. Das Schraubelement weist vorteilhafterweise Vertiefungen, insbesondere radial angeordnete Vertiefungen, auf, in die das Anschlagelement der Führungskulisse eingreift, wenn die Führungskulisse in die Arretierposition überführt ist. Hierdurch ist eine erneute Drehung der Kurbel verhindert.

Ferner kann bei einem Einschubrahmen vorgesehen sein, dass ein Positionssensor zur Feststellung der Stellungen des Einschubschaltgerätes innerhalb des Einschubrahmens vorgesehen ist, dass in der Arretierposition der Führungskulisse die Schaltaktoren an dem Positionssensor vorgespannt anliegen und dass der Positionssensor eine Aussparung aufweist, durch die einer der Schaltaktoren hindurch führbar ist, wenn sich das Einschubschaltgerät in der Nicht-Verbunden-Stellung, der Verbunden-Stellung oder einer Test-Stellung innerhalb der ersten Seitenwand des Einschubrahmens befindet. Der Positionssensor ist zur Feststellung der Stellungen des Einschubschaltgerätes beweglich innerhalb der ersten Seitenwand des Einschubrahmens gelagert. Dabei ist der Positionssensor vorteilhafterweise derart gelagert, dass er an den Schaltaktoren entlang geführt wird, wenn die Führungskulisse sich in der Arretierposition befindet. Das heißt, der Positionssensor gleitet bei der Bewegung des Einschubschaltgerätes innerhalb des Einschubrahmens an den Schaltaktoren entlang. Dabei ist der Positionssensor derart mit den Schaltaktoren abgestimmt, dass bei dem Erreichen einer Stellung, das heißt der Nicht-Verbunden-Stellung, der Test-Stellung oder der Verbunden-Stellung des Einschubrahmens, der entsprechende Schaltaktor durch die Aussparung des Positionssensors aufgrund der auf ihn wirkenden Federkraft hindurchgeführt wird, um anschließend im Eingriff mit einer Anzeigeeinrichtung des Einschubrahmens zu gelangen, die aufgrund der Betätigung des durch das federelastische Element betätigten Schaltaktor die entsprechende Stellung des Einschubrahmens beziehungsweise des Einschubschaltgerätes anzeigt. Bevorzugt ist daher ein Einschubrahmen, bei dem die Schaltaktoren zur Betätigung einer Anzeigeeinrichtung des Einschubrahmens ausgebildet sind, wobei bei der Hindurchführung des ersten Schaltaktors durch die Aussparung des Positionssensors die Anzeigeeinrichtung durch den ersten Schaltaktor zur Anzeige der Nicht-Verbunden-Stellung betätigt wird, wobei bei der Hindurchführung eines zweiten Schaltaktors durch die Aussparung des Positionssensors die Anzeigeeinrichtung durch den zweiten Schaltaktor zur Anzeige der Verbunden-Stellung betätigt wird und gegebenenfalls bei der Hindurchführung eines dritten Schaltaktors durch die Aussparung des Positionssensors die Anzeigeeinrichtung durch den dritten Schaltaktor zur Anzeige einer Test-Stellung betätigt wird.

Die Anzeigeeinrichtung ist derart ausgebildet und weist insbesondere entsprechende Anschlagelemente auf, dass die Anzeigeeinrichtung durch Anschlag eines der Schaltaktoren, insbesondere an die Anschlagelemente, bewegt, insbesondere linear verschoben, werden kann. Die Anzeigeeinrichtung kann ein Anzeigeelement aufweisen, das entlang einer Aussparung in der Frontseite der ersten Seitenwand führbar ist. An dem Anzeigeelement können Anzeigen der entsprechenden Stellungen angeordnet sein, so dass entsprechend der Stellung des Einschubrahmens und der damit verbundenen Stellung der Anzeigeeinrichtung dies dem Betrachter durch die Aussparung in der Frontseite der ersten Seitenwand angezeigt werden kann.

Zur Rückführung des Positionssensors kann ein Positionssensorfederelement vorgesehen sein. Bei der Einführung eines Einschubschaltgerätes in den Einschubrahmen wird der Positionssensor durch das Einschubschaltgerät bewegt. Hierbei wird das Positionssensorfederelement vorgespannt. Bei einer entgegengesetzten Bewegung des Einschubschaltgerätes, insbesondere bei einer Entfernung des Einschubschaltgerätes aus dem Einschubrahmen, sorgt die Kraft des Positionssensorfederelementes für eine Rückführung des Positionssensors in eine Ausgangsposition. In der Ausgangsposition ist der Positionssensor einer Führung an der Frontseite der ersten Seitenwand zugeordnet, so dass der Positionssensor bei der Einführung des Einschubschaltgerätes unmittelbar durch das Einschubschaltgerät bewegt wird.

Gemäß einer vorteilhaften Weiterentwicklung der Erfindung kann bei einem Einschubrahmen vorgesehen sein, dass der Positionssensor einen Blockiervorsprung aufweist, der zum Blockieren der Bewegung einer ersten Absperreinrichtung des Einschubrahmens ausgebildet ist. Die erste Absperreinrichtung des Einschubrahmens ermöglicht eine Blockierung beziehungsweise Abdeckung der Führung an der Vorderseite der ersten Seitenwand und gleichzeitig eine Verriegelung beziehungsweise Abdeckung der Kurbelöffnung an der Frontseite der ersten Seitenwand.

Gemäß eines zweiten Aspektes der Erfindung wird die Aufgabe durch eine Einheit aus einem Einschubrahmen und einem elektrischen Einschubschaltgerät, insbesondere einem Einschubleistungsschalter, besonders bevorzugt einem Einschubkompaktleistungsschalter, wobei das Einschubschaltgerät ein Gehäuse und einen Schaltmechanismus aufweist und wobei der Einschubrahmen zur Aufnahme des elektrischen Einschubschaltgerätes ausgebildet ist, gelöst. Ferner ist die Einheit dadurch gekennzeichnet, dass der Einschubrahmen gemäß des ersten Aspektes der Erfindung ausgebildet ist, das heißt nach einem der Ansprüche 1 bis 16 ausgebildet ist. Für die Einheit gelten entsprechend die gleichen Vorteile, wie sie ausführlich zu dem Einschubrahmen gemäß des ersten Aspektes der Erfindung ausgeführt sind. Einschubleistungsschalter können insbesondere elektromagnetische Selbstschalter sein. Sie können als Leistungsschutzschalter zum Sichern von Stromkreisen gegen Kurzschluss und/oder Überlastung und/oder Spannungsschwankungen eingesetzt werden. Auch ein Einsatz als Motorschutzschalter ist denkbar. Durch die Ausbildung des elektrischen Einschubschaltgerätes als Einschubleistungsschalter, insbesondere als Einschubkompaktleistungsschalter, kann das elektrische Einschubschaltgerät in einer großen Bandbreite von elektrischen Anwendungen eingesetzt werden. Der Einschubrahmen des elektrischen Einschubschaltgerätes ist auf die Größe des Einschubrahmens abgestimmt, so dass das Einschubschaltgerät vorzugsweise formschlüssig in den Einschubrahmen eingeführt werden kann. Der Einschubrahmen weist vorteilhafterweise neben der ersten Seitenwand weitere Seitenwände auf, so dass das Gehäuse des Einschubschaltgerätes vorteilhafterweise von allen Seiten durch den Einschubrahmen umgeben ist, wenn das Einschubschaltgerät sich in dem Einschubrahmen befindet. Lediglich die Frontseite des Einschubschaltgerätes bleibt frei zugänglich, wenn dieses in den Einschubrahmen eingeführt ist.

Allgemein betrachtet ist die erste Seitenwand des Einschubrahmens ein Gehäuse, in dem die entsprechenden Elemente aufgenommen sind.

Die vorliegende Erfindung wird nachfolgend anhand der beigefügten Zeichnungsfiguren näher erläutert. Es zeigen jeweils schematisch:
- Figur 1: eine perspektivische Ansicht eines Positionssensors eines Einschubrahmens, der gemäß dem erfindungsgemäßen Konstruktionsprinzip ausgebildet ist,
- Figur 2: eine perspektivische Ansicht auf den Positionssensor gemäß Fig. 1 und zusätzlich drei Schaltaktoren, die in Wirkverbindung zu dem Positionssensor bringbar sind,
- Figur 3: eine Schnittdarstellung durch eine Seitenwand eines erfindungsgemäßen Einschubrahmens,
- Figur 4: in einer perspektivischen Ansicht eine Führungskulisse eines erfindungsgemäßen Einschubrahmens,
- Figur 5: in einer perspektivischen Ansicht einen Entarretierhebel eines erfindungsgemäßen Einschubrahmens,
- Figur 6: in einer anderen perspektivischen Ansicht den Entarretierhebel gemäß Fig. 5,
- Figur 7: in einer Schnittdarstellung eine erste Seitenwand des Einschubrahmens, wobei sich die Führungskulisse in einer Nicht-Arretierposition befindet,
- Figur 8: die erste Seitenwand gemäß Fig. 7, wobei die Führungskulisse sich in der Arretierposition befindet,
- Figur 9: die erste Seitenwand gemäß Fig. 7 und 8, wobei die Führungskulisse durch Bewegung des Entarretierhebels in die Nicht-Arretierposition bewegt wird,
- Figur 10: in einer perspektivischen Ansicht ein Entarretierhebel und die Führungskulisse eines erfindungsgemäβen Einschubrahmens und
- Figur 11: in einer anderen perspektivischen Ansicht den Entarretierhebel und die Führungskulisse gemäß Fig. 10.

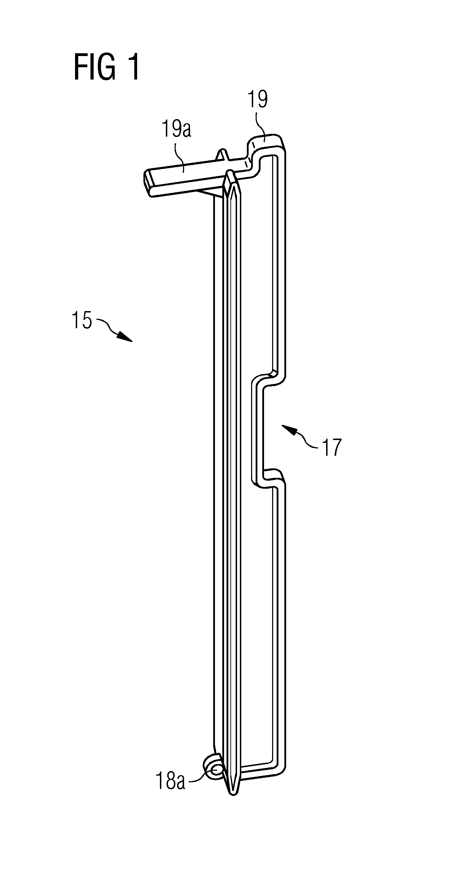

Elemente mit gleicher Funktion und Wirkungsweise sind in den Figuren 1 bis 11 jeweils mit denselben Bezugszeichen versehen.

In Fig. 1 ist schematisch in einer perspektivischen Ansicht ein Positionssensor 15, der zur Feststellung der Stellungen des Einschubschaltgerätes innerhalb des Einschubrahmens vorgesehen ist, dargestellt. Der Positionssensor 15 ist beweglich innerhalb des Einschubrahmens, das heißt, innerhalb der ersten Seitenwand 2, gelagert. Der Positionssensor 15 weist einen Anschlagvorsprung 19a auf, der zum Anschlag eines eingeführten Einschubschaltgerätes dient. Bei einem Anschlag eines Einschubschaltgerätes an den Anschlagvorsprung 19a wird der Positionssensor 15 innerhalb der ersten Seitenwand 2 verschoben. In Verbindung mit den Schaltaktoren 60, 61, 62 dient der Positionssensor 15 zum Anzeigen der Stellung des Einschubrahmens beziehungsweise des Einschubschaltgerätes an dem Einschubrahmen. Der Positionssensor 15 weist einen Haken 18a zum Befestigen eines Positionssensorfederelementes 18 auf. Ferner weist der Positionssensor 15 eine Aussparung 17 auf, durch die einer der Schaltaktoren 60, 61, 62 hindurchführbar ist, wenn sich das Einschubschaltgerät in der Nicht-Verbunden-Stellung, der Verbunden-Stellung oder einer Test-Stellung innerhalb der ersten Seitenwand 2 des Einschubrahmens befindet. Das Positionssensorfederelement 18 dient zur Rückführung des Positionssensors 15 in seine Ausgangsposition, wenn das Einschubschaltgerät aus dem Einschubrahmen entfernt wird.

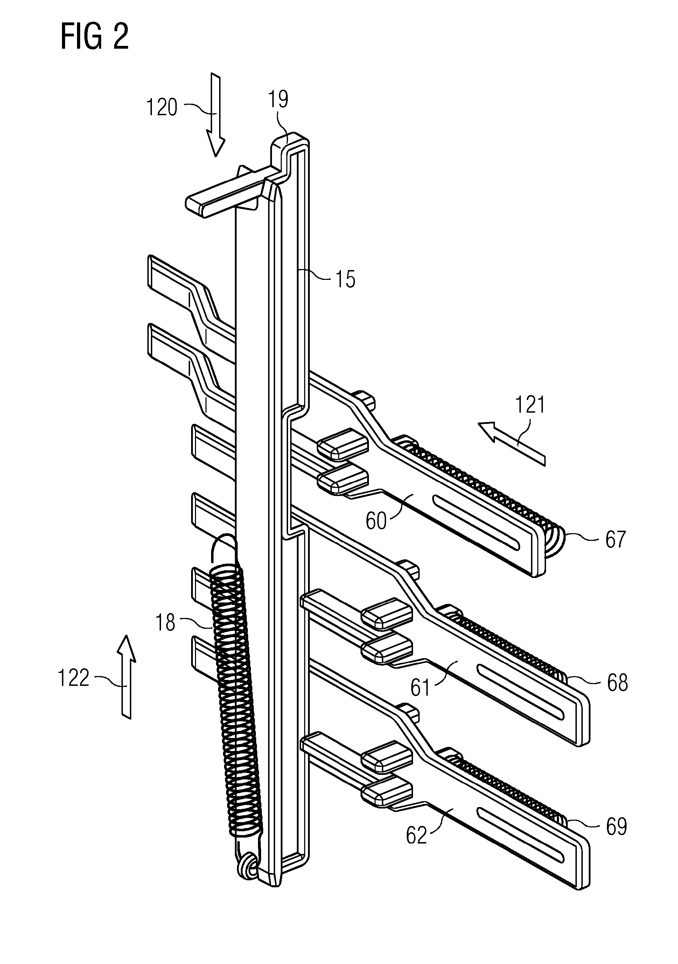

In Fig. 2 sind schematisch in einer perspektivischen Ansicht ein Positionssensor 15 gemäß Fig. 1 sowie drei Schaltaktoren 60, 61, 62 gezeigt. An dem Haken 18a des Positionssensors 50 ist ein Positionssensorfederelement 18 angeordnet, welches dazu dient, den Positionssensor 15 nach einer Verschiebung zurück in eine Ausgangsposition zu bringen. Während der Einführung eines Einschubschaltgerätes in den Einschubrahmen wird der Positionssensor 15 durch das Einschubschaltgerät mit einer Kraft beaufschlagt. Die Kraftrichtung der Kraft des Einschubschaltgerätes ist durch das Bezugszeichen 120 dargestellt. Das vorgespannte Positionssensorfederelement 18 wirkt mit einer Kraft, deren Kraftrichtung durch das Bezugszeichen 122 dargestellt ist, entgegen der Verschiebung des Positionssensors 50 in das Innere der ersten Seitenwand 2 des Einschubrahmens. Die Schaltaktoren 60, 61, 62 weisen Anschläge auf, die zum Anschlag der Schaltaktoren 60, 61, 62 an den Positionssensor 15 dienen. Jeder Schaltaktor 60, 61, 62 ist durch ein federelastisches Element 67, 68, 69 vorgespannt, wobei die Kraftrichtung der federelastischen Elemente 67, 68, 69 durch das Bezugszeichen 121 dargestellt ist.

Die Schaltaktoren 60, 61, 62 sind zur Betätigung einer Anzeigeeinrichtung 50 des Einschubrahmens ausgebildet sind, wobei bei der Hindurchführung eines ersten Schaltaktors 60 durch die Aussparung 17 des Positionssensors 15 die Anzeigeeinrichtung 50 durch den ersten Schaltaktor 60 zur Anzeige der Nicht-Verbunden-Stellung betätigt wird, wobei bei der Hindurchführung eines zweitens Schaltaktors 62 durch die Aussparung 17 des Positionssensors 15 die Anzeigeeinrichtung 50 durch den zweiten Schaltaktor 62 zur Anzeige der Verbunden-Stellung betätigt wird und gegebenenfalls bei der Hindurchführung eines dritten Schaltaktors 61 durch die Aussparung 17 des Positionssensors 15 die Anzeigeeinrichtung 50 durch den dritten Schaltaktor 61 zur Anzeige einer Test-Stellung betätigt wird.

Der Positionssensor 15 weist ferner einen Blockiervorsprung 19 auf, der dazu dient, eine erste Absperreinrichtung 20 des Einschubrahmens in einer bestimmten Position zu blockieren.

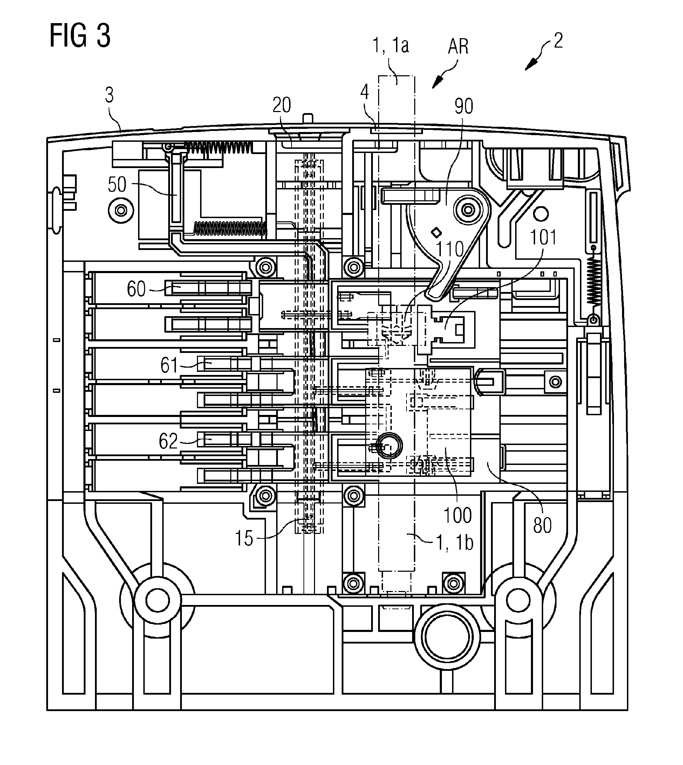

In der Fig. 3 ist schematisch in einer Schnittansicht eine erste Seitenwand 2 eines Einschubrahmens, der nach dem erfindungsgemäßen Konstruktionsprinzip ausgebildet ist, gezeigt. Der Einschubrahmen weist eine Anzeigeeinrichtung 50 auf, die durch die Schaltaktoren 60, 61, 62 betätigt, insbesondere linear verschoben, werden kann. In der Frontseite 3 der ersten Seitenwand 2 des Einschubrahmens ist eine nicht näher dargestellte Aussparung vorgesehen, durch die die Anzeigeeinrichtung 50, insbesondere ein Anzeigeelement der Anzeigeeinrichtung 50, von einem Betrachter gesehen werden kann. Je nach Verschiebung der Anzeigeeinrichtung 50 und der Zuordnung der Anzeigeeinrichtung 50 zu der Aussparung in der Frontseite 3 erkennt der Betrachter, in welcher Stellung sich der Einschubrahmen beziehungsweise das in den Einschubrahmen eingeführte Einschubschaltgerät befindet. Die Schaltaktoren 60, 61, 62 sind an der Führungskulisse 80 beweglich gehalten. Die Führungskulisse 80 ist innerhalb der ersten Seitenwand 2 zwischen einer Arretierposition AR und einer Nicht-Arretierposition NA beweglich gelagert. In Fig. 3 befindet sich die Führungskulisse 80 in der Arretierposition AR. In der Frontseite 3 der ersten Seitenwand 2 ist eine Kurbelöffnung 4 vorgesehen, durch die eine Kurbel 1 in das Innere der ersten Seitenwand 2 eingeführt ist. Die Kurbel 1 steht nach ihrer Einführung durch die Kurbelöffnung 4 mit einer nicht näher dargestellten Spindel in Wirkkontakt, so dass bei eine Drehung der Kurbel 1 die Spindel die Drehbewegung in eine translatorische Bewegung umsetzt, so dass dadurch das in dem Einschubrahmen eingeführte Einschubschaltgerät bewegt, insbesondere abgesenkt oder angehoben, werden kann. Hierdurch ist eine definierte Bewegung des Einschubschaltgerätes innerhalb des Einschubrahmens ermöglicht. Die Kurbel 1 ist vorzugsweise zweiteilig ausgebildet, wobei ein eingebautes Kurbelteil 1b drehbeweglich mit der Spindel innerhalb der ersten Seitenwand 2 des Einschubrahmens angeordnet ist und ein einführbares Kurbelteil 1a in das eingebaute Kurbelteil 1b eingreifen kann. Ferner kann an der Kurbel 1 ein Schraubelement 110 angeordnet sein, das dazu dient, dass ein Anschlagelement 101, welches an der Führungskulisse 80 angeordnet ist, in dieses Schraubelement 110 eingreifen kann, wenn die Führungskulisse 80 in der Arretierposition AR steht. Hierdurch ist verhindert, dass die Kurbel 1 weiter gedreht werden kann, wenn über die Führungskulisse 80 und die Schaltaktoren 60, 61, 62 eine bestimmte Stellung des Einschubschaltgerätes angezeigt wird. Die Führungskulisse 80 weist ferner ein Halteelement 100 auf, welches beweglich gelagert innerhalb der ersten Seitenwand 2 angeordnet ist. Dieses Halteelement 100 ist durch die Kurbel 1 parallel zur Einführrichtung der Kurbel 1 bewegbar und dient zum Halten der Führungskulisse 80 in der Nicht-Arretierposition NA. Vorzugsweise weist die Führungskulisse 80 Rastelemente 84 auf, die hier nicht näher dargestellt sind, die in Eingriff mit dem Halteelement 100 stehen, wenn die Führungskulisse 80 sich in der Nicht-Arretierposition NA befindet und keine Kurbel in das Innere des Einschubrahmens eingefügt ist. Das Halteelement 100 ist derart ausgebildet, dass es bei einer Bewegung in Richtung der Einführrichtung der Kurbel 1 die Führungskulisse 80 freigeben kann, so dass die Führungskulisse 80 von der Nicht-Arretierposition NA in die Arretierposition AR überführt werden kann. Die Führungskulisse 80 kann mit einer Kraft eines federelastischen Elementes vorgespannt sein, welches die Führungskulisse 80 aus der Nicht-Arretierposition NA in die Arretierposition AR überführen kann, wenn die Führungskulisse 80 nicht mehr von dem Halteelement 100 gehalten wird. Die Führungskulisse 80 ist vorzugsweise linear verschiebbar innerhalb der ersten Seitenwand 2 des Einschubrahmens gehalten. Der Positionssensor 15 ist derart verschiebbar innerhalb der ersten Seitenwand 2 des Einschubrahmens gehalten, dass er entlang der Führungskulisse 80 und entlang den Schaltaktoren 60, 61, 62 geführt werden kann.

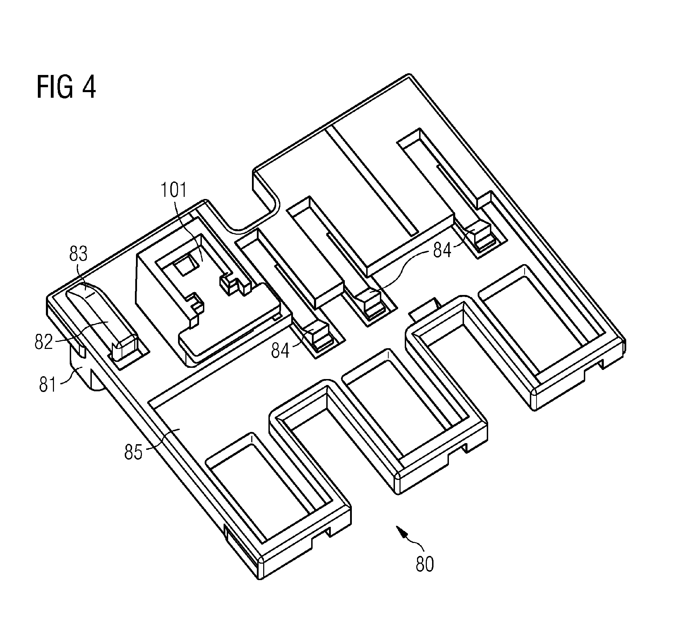

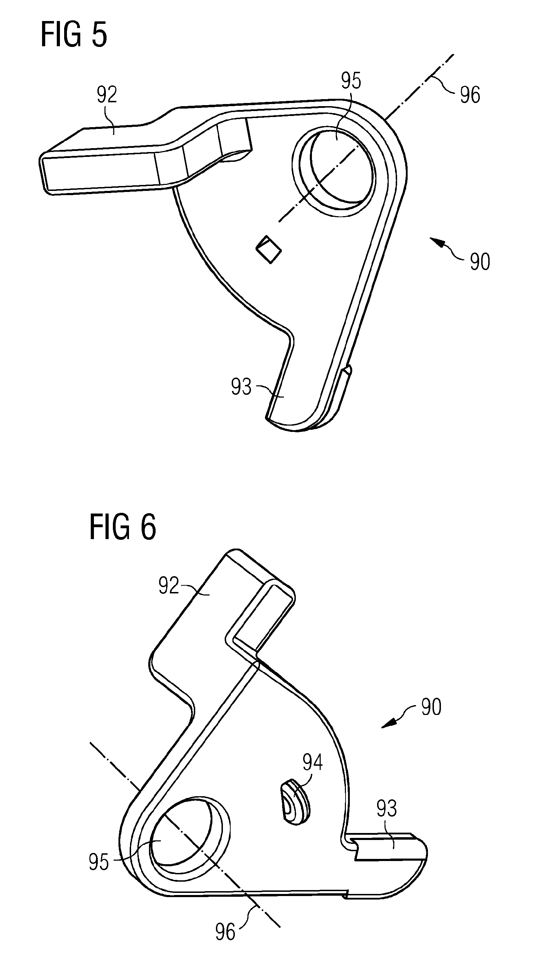

Fig. 4 zeigt eine innerhalb der ersten Seitenwand 2 beweglich gelagerte Führungskulisse 80. An der Führungskulisse 80 können die Schaltaktoren 60, 61, 62 beweglich gelagert werden. Die Führungskulisse 80 weist einen Führungskulissenkörper 85 auf, an dem Rastelemente 84 schwenkbeweglich angeordnet sind, die dazu dienen mit dem Halteelement 100 in Eingriff zu stehen, wenn die Führungskulisse 80 in der Nicht-Arretierposition NA durch das Halteelement 100 gehalten werden kann. Ferner ist an der Führungskulisse 80 ein Anschlagelement 101 befestigt, das dazu dient, in ein Schraubelement 101 an der Kurbel 1 einzugreifen, wenn die Führungskulisse 80 von der Nicht-Arretierposition NA in die Arretierposition AR überführt worden ist. An der Führungskulisse 80 ist eine Nase 81 angeordnet, die zum Blockieren eines nicht dargestellten Schließschiebers des Einschubrahmens dient. Ferner weist die Führungskulisse 80 einen Führungsvorsprung 82 auf, der dazu dient mit dem Entarretierhebel 90, der in Fig. 3 und in den Fig. 5 und 6 dargestellt ist, in Wirkverbindung zu treten. Der Führungsvorsprung 82 weist eine Abschrägung 83 auf, entlang derer der Entarretierhebel 90 geführt werden kann.

In den Fig. 5 und 6 ist ein Entarretierhebel 90 eines Einschubrahmens näher darstellt. Der Entarretierhebel 90 ist über eine Lagerung 95 um eine Drehachse 96 innerhalb der ersten Seitenwand 2 des Einschubrahmens beweglich, insbesondere drehbeweglich, gelagert. Der Entarretierhebel 90 weist einen Anschlag 92 auf, an dem eine Kurbel 1, insbesondere das freie Ende eines einführbaren Kurbelteils 1a, anschlagen kann, um den Entarretierhebel 90 um dessen Drehachse 96 zu verdrehen. Ferner weist der Entarretierhebel 90 einen Anschlagarm 93 auf, der ausgebildet ist, mit dem Führungsvorsprung 82 der Führungskulisse 80 in Wirkkontakt zu treten. Ferner ist an dem Entarretierhebel 90 ein Haken 94 für eine Hebelfeder 91 angeordnet, wobei die Hebelfeder 91 dazu dient, den Entarretierhebel 90 aus einer Endposition END in eine Ausgangsposition AUS zu bewegen. Die Funktionsweise des Entarretierhebels 90 ist in den nachfolgenden Figuren näher beschrieben.

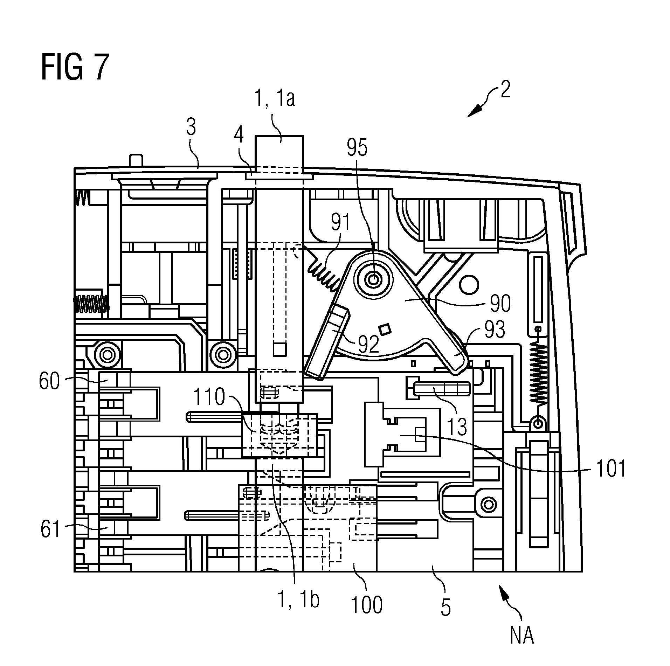

In den Fig. 7 bis 9 ist die erste Seitenwand 2 eines erfindungsgemäßen Einschubrahmens in einer Schnittdarstellung näher dargestellt.

In Fig. 7 befindet sich die Führungskulisse 80 in der Nicht-Arretierposition NA. Der Entarretierhebel 90 steht in der dargestellten Situation nicht in Wirkkontakt zu der Führungskulisse 80 beziehungsweise dem Führungsvorsprung 82 der Führungskulisse 80. Der Entarretierhebel 90 ist durch die Einführung der Kurbel 1 beziehungsweise des einführbaren Kurbelteils 1a aus seiner Ausgangsposition AUS verschwenkt beziehungsweise verdreht worden, wobei die Hebelfeder 91 vorgespannt wurde. Nach einer Entfernung der Kurbel 1 beziehungsweise des einführbaren Kurbelteils 1a aus der Kurbelöffnung 4 sorgt die Hebelfeder 91 für eine Rückführung des Entarretierhebels 90 in dessen Ausgangsposition AUS. Das Anschlagelement 101 der Führungskulisse 80 steht nicht in Eingriff mit einem Schraubelement 101 der Kurbel 1, so dass die Kurbel 1 innerhalb der ersten Seitenwand 2 gedreht werden kann, um so das in den Einschubrahmen eingeführte Einschubschaltgerät anzuheben oder abzusenken. An die Bewegung der Kurbel 1 ist die Bewegung des Halteelementes 100, welches beweglich gelagert innerhalb der ersten Seitenwand 2 angeordnet ist, gekoppelt. Das Halteelement 100 hält die Führungskulisse 80 in der Nicht-Arretierposition NA. Dazu greifen Rastelemente 84 des Führungskulissenkörpers 85 der Führungskulisse 80 an dem Halteelement 100 an. Durch eine Verschiebung des Halteelementes 100 geraten die Rastelemente 84 außer Eingriff mit dem Halteelement 100, so dass in dem Fall, dass die Rastelemente 84 außer Eingriff zu dem Halteelement 100 stehen, die Führungskulisse 80 von der Nicht-Arretierposition NA in die Arretierposition AR überführt wird. Hierzu kann ein Federelement dienen, welches in der Nicht-Arretierposition NA der Führungskulisse 80 vorgespannt ist, und diese in Richtung der Arretierposition AR mit einer Kraft beaufschlagt.

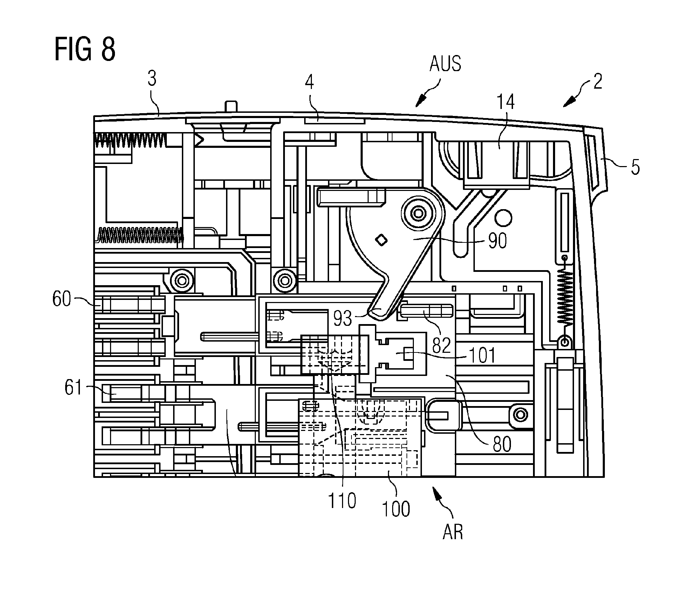

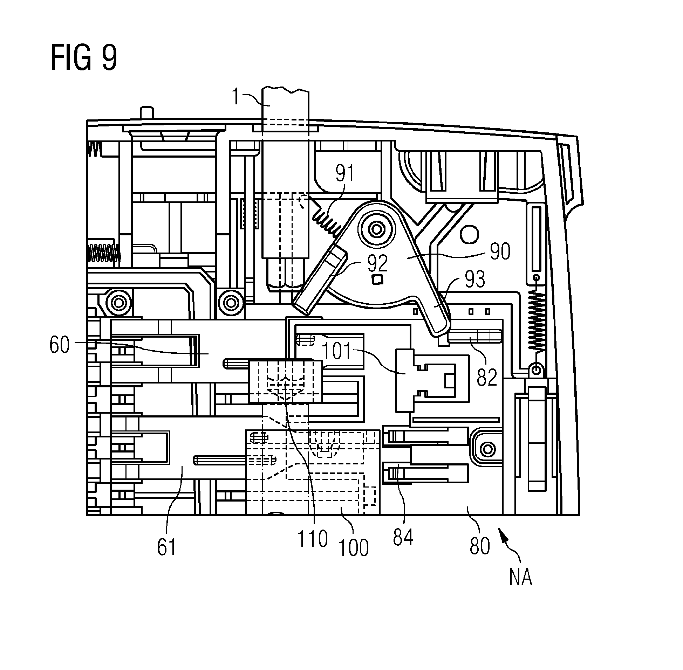

Fig. 8 zeigt eine Führungskulisse 80 in der Arretierposition AR. Der Entarretierhebel 90 befindet sich in seiner Ausgangsposition AUS. Der Anschlag 92 des Entarretierhebels 90 ist fluchtend zu der Kurbelöffnung 4 angeordnet, so dass bei einer Einführung der Kurbel 1 in das Innere der ersten Seitenwand 2, wie in Fig. 9 dargestellt, die Kurbel 1, insbesondere die Kurbelspitze, an dem Anschlag 92 des Entarretierhebels 90 anschlägt, um diesen zu verschwenken beziehungsweise zu verdrehen. Bei der Bewegung des Entarretierhebels 90, insbesondere der Verdrehung des Entarretierhebels 90 um dessen Drehachse 96, gerät der Anschlagarm 93 des Entarretierhebels 90 in Eingriff mit dem Führungsvorsprung 82 der Führungskulisse 80. Dadurch verschiebt der Entarretierhebel 90 durch die Einführung der Kurbel 1, insbesondere des einführbaren Kurbelteils 1a, in das Innere des Einschubrahmens die Führungskulisse 80 von der Arretierposition AR in die Nicht-Arretierposition NA, wie in Fig. 9 dargestellt.

In Fig. 9 hat die Führungskulisse 80 die Nicht-Arretierposition NA erreicht, der Entarretierhebel 90 jedoch noch nicht seine Endposition. Wird die Kurbel 1 beziehungsweise das einführbare Kurbelteil 1a weiter in das Innere der ersten Seitenwand 2 eingeführt, bis das einführbare Kurbelteil 1a in Wirkkontakt mit dem eingebauten Kurbelteil 1b steht, wird der Entarretierhebel 90 weiterverdreht, so dass der Anschlagarm 93 des Entarretierhebels 90 an dem Führungsvorsprung 82 der Führungskulisse 80 vorbeigeführt wird. Dies ist dadurch möglich, dass der Entarretierhebel 90 nicht nur in einer Ebene bewegbar, insbesondere verdrehbar ist, sondern auch zu dieser Ebene verschwenkbar beziehungsweise kippbar ausgebildet ist. Hierdurch kann der Entarretierhebel 90 beziehungsweise der Anschlagarm 93 des Entarretierhebels 90 an dem Führungsvorsprung 82 der Führungskulisse 80 vorbeigeführt werden. Erst dann erreicht der Entarretierhebel 90 seine Endposition END. Damit der Entarretierhebel 90 nach der Entlangführung an dem Führungsvorsprung 82 und nach dem Entfernen der Kurbel 1 beziehungsweise des einführbaren Kurbelteils 1a aus dem Inneren der ersten Seitenwand 2 zurück in seine Ausgangsposition AUS geführt werden kann, muss der Entarretierhebel 90 erneut am Führungsvorsprung 82 der Führungskulisse 80 vorbei geführt werden. Damit dies erfolgt, ist zum einen der Entarretierhebel 90 in der Endposition END durch die Hebelfeder 91 vorgespannt und gleichzeitig weist der Führungsvorsprung 82 eine Abschrägung 83 auf, die ein einfaches Entlanggleiten des Anschlagarmes 93 an dem Führungsvorsprung 82 ermöglicht. Durch eine Dreh- und Kippbewegung des Entarretierhebels 90 kann dieser zurück in die Ausgangsposition AUS bewegt werden. Die Führungskulisse 80 verharrt dabei in der Nicht-Arretierposition NA, wie in Fig. 9 dargestellt.

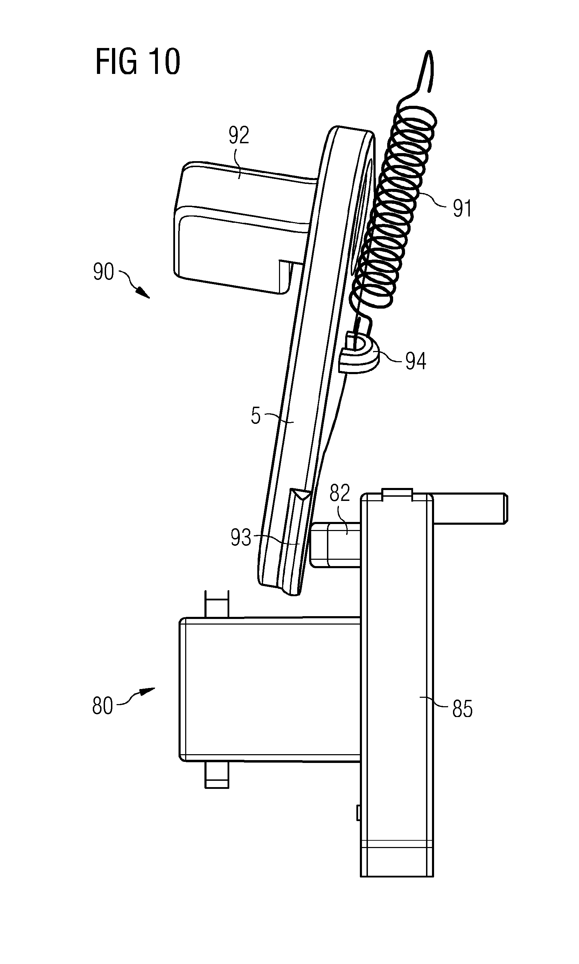

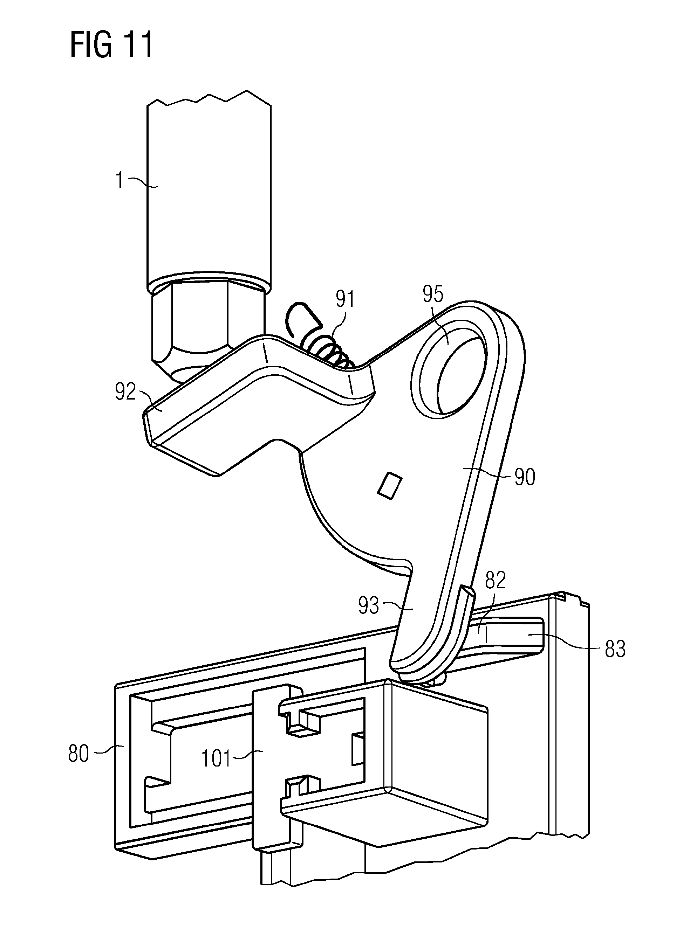

In den Fig. 10 und 11 ist das Vorbeiführen des Entarretierhebels 90 an dem Führungsvorsprung 82 der Führungskulisse 80 näher dargestellt. An dem Haken 94 des Entarretierhebels 90 ist die Hebelfeder 91 angeordnet, die bei einer Bewegung des Entarretierhebels 90 von dessen Ausgangsposition AUS in dessen Endposition END vorgespannt wird. Diese sorgt dafür, dass der Entarretierhebel 90 von seiner Endposition END zurück in seine Ausgangsposition AUS geführt wird. Damit der Entarretierhebel 90 beziehungsweise der Anschlagarm 93 des Entarretierhebels 90 an dem Führungsvorsprung 82 der Führungskulisse 80, nach Erreichen der Nicht-Arretierposition NA der Führungskulisse 80, vorbeigeführt werden kann, ist der Entarretierhebel 90 nicht nur in einer Ebene verdrehbar, sondern auch zu der Ebene verschwenkbar beziehungsweise kippbar. Hierdurch ist gewährleistet, dass der Entarretierhebel 90 an dem Führungsvorsprung 82 vorbeigeführt werden kann, wenn die Führungskulisse 80 die Nicht-Arretierposition NA eingenommen hat, der Entarretierhebel 90 aber durch die Einführung der Kurbel 1 weiter verschwenkt wird. Dies ist insbesondere anhand der Fig. 10 und 11 erkennbar. Wird die Kurbel 1 in das Innere der ersten Seitenwand 2 des Einschubrahmens eingeführt, verdreht die Kurbel 1 durch Anschlag der Spitze der Kurbel 1 an den Anschlag 92 des Entarretierhebels 90 diesen, bis der Anschlagarm 93 den Führungsvorsprung 82 der Führungskulisse 80 hintergreift. In dem Fall, dass die Kurbel 1 aus dem Inneren der ersten Seitenwand 2 entfernt wird, sorgt die Hebelfeder 91 dafür, dass der Entarretierhebel 90 beziehungsweise der Anschlagarm 93 des Entarretierhebels 90 erneut an dem Führungsvorsprung 82 der Führungskulisse 80 vorbeigeführt wird, um die Ausgangsposition AUS einzunehmen. Zum leichteren Entlangführen des Anschlagarms 93 an dem Führungsvorsprung 82 weist dieser eine Abschrägung 83 auf.

Die voranstehende Erläuterung der Ausführungsformen des Einschubrahmens beschreibt die vorliegende Erfindung nur im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 1: Kurbel
- 1a: einführbares Kurbelteil
- 1b: eingebautes Kurbelteil
- 2: erste Seitenwand
- 3: Frontseite
- 4: Kurbelöffnung

- 15: Positionssensor
- 17: Aussparung im Positionssensor
- 18: Positionssensorfederelement
- 18a: Haken für Positionssensorfederelement
- 19: Blockiervorsprung
- 19a: Anschlagvorsprung

- 20: erste Absperreinrichtung

- 50: Anzeigeeinrichtung

- 60: erster Schaltaktor
- 61: dritter Schaltaktor
- 62: zweiter Schaltaktor
- 67: federelastisches Element
- 68: federelastisches Element
- 69: federelastisches Element

- 80: Führungskulisse
- 81: Nase
- 82: Führungsvorsprung
- 83: Abschrägung
- 84: Rastelemente
- 85: Führungskulissenkörper

- 90: Entarretierhebel
- 91: Hebelfeder
- 92: Anschlag
- 93: Anschlagarm
- 94: Haken für Hebelfeder
- 95: Lagerung
- 96: Drehachse

- 100: Halteelement
- 101: Anschlagelement

- 110: Schraubelement

- NA: Nicht-Arretierposition der Führungskulisse
- AR: Arretierposition der Führungskulisse

- AUS: Ausgangsposition des Entarretierhebels
- END: Endposition des Entarretierhebels

- 120: Kraftrichtung vom Einschubschaltgerät auf Positionssensor
- 121: Kraftrichtung der federelastischen Elemente auf die Schaltaktoren
- 122: Kraftrichtung des Positionssensorfederelementes auf den Positionssensor

## Patentansprüche

1. Einschubrahmen für ein elektrisches Einschubschaltgerät, insbesondere einen Einschubleistungsschalter, aufweisend einen Adaptersockel zum elektrischen Anschließen des Einschubschaltgerätes an eine Energieversorgung, wobei das Einschubschaltgerät nach dem Einschieben in den Einschubrahmen zumindest in einer Verbunden-Stellung oder einer Nicht-Verbunden-Stellung in dem Einschubrahmen gehalten werden kann, eine Spindel zum Absenken und Anheben des Einschubschaltgerätes relativ zum Einschubrahmen, eine Kurbel (1) zur Betätigung der Spindel, eine erste Seitenwand (2) zum seitlichen Halten und/oder Führen des Einschubschaltgerätes in dem Einschubrahmen, wobei die erste Seitenwand (2) an ihrer Frontseite (3) eine Kurbelöffnung (4) zur Durchführung der Kurbel (1) durch die erste Seitenwand (2) zu der Spindel aufweist,
**dadurch gekennzeichnet,**
**dass** eine Führungskulisse (80) vorgesehen ist, die innerhalb der ersten Seitenwand (2) zwischen einer Arretierposition (AR) und eine Nicht-Arretierposition (NA) beweglich gelagert ist, wobei die Führungskulisse (80) zur beweglichen Lagerung von wenigstens zwei Schaltaktoren (60, 61, 62) ausgebildet ist, dass ein Entarretierhebel (90) innerhalb der ersten Seitenwand (2) zwischen einer Ausgangsposition (AUS) und einer Endposition (END) beweglich gelagert angeordnet ist, der durch die Kurbel (1), die durch die Kurbelöffnung (4) in das Innere der ersten Seitenwand (2) einführbar ist, zur Überführung der Führungskulisse (80) von der Arretierposition (AR) in die Nicht-Arretierposition (NA) betätigt werden kann, wobei der Entarretierhebel (90) derart ausgebildet ist und mit der Führungskulisse (80) in Wirkkontakt bringbar ist, dass nach der Überführung der Führungskulisse (80) in die Nicht-Arretierposition (NA) der Entarretierhebel (90) in eine Endposition (END) bewegt wird und nach dem Entfernen der Kurbel (1) aus dem Inneren der ersten Seitenwand (2) der Entarretierhebel (90) automatisch zurück in die Ausgangsposition (AUS) zurück bewegt wird.

2. Einschubrahmen nach Anspruch 1,
**dadurch gekennzeichnet,**
**dass** eine Hebelfeder (91) vorgesehen ist, die in der Endposition (END) des Entarretierhebels (90) eine Kraft auf den Entarretierhebel (90) in Richtung der Ausgangsposition (AUS) ausübt.

3. Einschubrahmen nach Anspruch 1 oder 2,
**dadurch gekennzeichnet,**
**dass** die Führungskulisse (80) einen Führungsvorsprung (82) aufweist, an den der Entarretierhebel (90) zur Überführung der Führungskulisse (80) von der Arretierposition (AR) in die Nicht-Arretierposition (NA) angreifen kann.

4. Einschubrahmen nach Anspruch 3,
**dadurch gekennzeichnet,**
**dass** der Führungsvorsprung (82) und der Entarretierhebel (90) derart ausgebildet sind, dass nach dem Entfernen der Kurbel (1) aus dem Inneren der ersten Seitenwand (2) der Entarretierhebel (90) aufgrund der Kraft der Hebelfeder (91) an dem Führungsvorsprung (82) zur Rückkehr in die Ausgangsposition (AUS) entlangführbar ist.

5. Einschubrahmen nach mindestens einem der vorhergehenden Ansprüche 3 oder 4,
**dadurch gekennzeichnet,**
**dass** der Führungsvorsprung (82) zumindest eine Abschrägung (83) zum Angriff des Entarretierhebels (90) aufweist.

6. Einschubrahmen nach mindestens einem der vorhergehenden Ansprüche,
**dadurch gekennzeichnet,**
**dass** der Entarretierhebel (90) einen Anschlag (92) zum Anschlagen der Kurbel (1) aufweist.

7. Einschubrahmen nach mindestens einem der vorhergehenden Ansprüche,
**dadurch gekennzeichnet,**
**dass** der Entarretierhebel (90) um eine Drehachse (96) innerhalb der ersten Seitenwand (2) drehbar gelagert ist.

8. Einschubrahmen nach mindestens einem der vorhergehenden Ansprüche 2 bis 6,
**dadurch gekennzeichnet,**
**dass** der Entarretierhebel (90) in einer Ebene beweglich gelagert und zu der Ebene verschwenkbar gehalten ist.

9. Einschubrahmen nach mindestens einem der vorhergehenden Ansprüche,
**dadurch gekennzeichnet,**
**dass** die Führungskulisse (80) zum Halten der Schaltaktoren (60, 61, 62) und zum Freigeben der Bewegung der Schaltaktoren (60, 61, 62) ausgebildet ist, wobei jeder Schaltaktoren (60, 61, 62) durch ein federelastisches Element (67, 68, 69) gegenüber der Führungskulisse (80) vorgespannt ist.

10. Einschubrahmen nach mindestens einem der vorhergehenden Ansprüche,
**dadurch gekennzeichnet,**
**dass** ein Halteelement (100) beweglich gelagert innerhalb der ersten Seitenwand (2) angeordnet ist, das durch die Kurbel (1) parallel zur Einführrichtung der Kurbel (1) bewegbar ist und das zum Halten der Führungskulisse (80) in der Nicht-Arretierposition (NA) der Führungskulisse (80) ausgebildet ist, wobei das Halteelement (100) derart ausgebildet ist, dass es bei einer Bewegung in Richtung der Einführrichtung der Kurbel (1) die Führungskulisse (80) freigeben kann, so dass die Führungskulisse (80) von der Nicht-Arretierposition (NA) in die Arretierposition (AR) überführt wird.

11. Einschubrahmen nach Anspruch 10,
**dadurch gekennzeichnet,**
**dass** ein Anschlagelement (101) an der Führungskulisse (80) vorgesehen ist, das zum Blockieren der Drehbewegung der Kurbel (1) in der Arretierposition (AR) der Führungskulisse (80) ausgebildet ist.

12. Einschubrahmen nach Anspruch 11,
**dadurch gekennzeichnet,**
**dass** ein Schraubelement (110) der Kurbel (1) und die Führungskulisse (80) derart ausgebildet sind und in Wirkkontakt zueinander bringbar sind, dass in der Nicht-Arretierposition (NA) der Führungskulisse (80) das Schraubelement (110) und die Kurbel (1) durch Nichteingriff des Anschlagelements (101) in das Schraubelement (110) drehbar sind und dass in der Arretierposition (AR) der Führungskulisse (80) das Schraubelement (110) und die Kurbel (1) durch Eingriff des Anschlagelements (101) in das Schraubelement (110) nicht drehbar sind.

13. Einschubrahmen nach mindestens einem der vorhergehenden Ansprüche,
**dadurch gekennzeichnet,**
**dass** ein Positionssensor (15) zur Feststellung der Stellungen des Einschubschaltgerätes innerhalb des Einschubrahmens vorgesehen ist, dass in der Arretierposition (AR) der Führungskulisse (80) die Schaltaktoren (60, 61, 62) an dem Positionssensor (15) vorgespannt anliegen, dass der Positionssensor (15) eine Aussparung (17) aufweist, durch die einer der Schaltaktoren (60, 61, 62) hindurchführbar ist, wenn sich das Einschubschaltgerät in der Nicht-Verbunden-Stellung, der Verbunden-Stellung oder einer Test-Stellung innerhalb der ersten Seitenwand (2) des Einschubrahmens befindet.

14. Einschubrahmen nach Anspruch 13,
**dadurch gekennzeichnet,**
**dass** die Schaltaktoren (60, 61, 62) zur Betätigung einer Anzeigeeinrichtung (50) des Einschubrahmens ausgebildet sind, wobei bei der Hindurchführung eines ersten Schaltaktors (60) durch die Aussparung (17) des Positionssensors (15) die Anzeigeeinrichtung (50) durch den ersten Schaltaktor (60) zur Anzeige der Nicht-Verbunden-Stellung betätigt wird, wobei bei der Hindurchführung eines zweitens Schaltaktors (62) durch die Aussparung (17) des Positionssensors (15) die Anzeigeeinrichtung (50) durch den zweiten Schaltaktor (62) zur Anzeige der Verbunden-Stellung betätigt wird und gegebenenfalls bei der Hindurchführung eines dritten Schaltaktors (61) durch die Aussparung (17) des Positionssensors (15) die Anzeigeeinrichtung (50) durch den dritten Schaltaktor (61) zur Anzeige einer Test-Stellung betätigt wird.

15. Einschubrahmen nach mindestens einem der vorhergehenden Ansprüche 13 oder 14,
**dadurch gekennzeichnet,**
**dass** der Positionssensor (15) durch ein Positionssensorfederelement (18) vorspannbar ist

16. Einschubrahmen nach mindestens einem der vorhergehenden Ansprüche 13 bis 15,
**dadurch gekennzeichnet,**
**dass** der Positionssensor (15) einen Blockiervorsprung (19) aufweist, der zum Blockieren der Bewegung einer ersten Absperreinrichtung (20) des Einschubrahmens ausgebildet ist.

17. Einheit aus einem Einschubrahmen und einem elektrischen Einschubschaltgerät, insbesondere einem Einschubleistungsschalter, wobei das Einschubschaltgerät ein Gehäuse und einen Schaltmechanismus aufweist und wobei der Einschubrahmen zur Aufnahme des elektrischen Einschubschaltgerätes ausgebildet ist,
**dadurch gekennzeichnet,**
**dass** der Einschubrahmen nach mindestens einem der vorhergehenden Ansprüche ausgebildet ist.

## Claims

1. Withdrawable part rack for an electrical withdrawable switching device, in particular a withdrawable circuit breaker, having an adapter base for electrically connecting the withdrawable switching device to a power supply, wherein the withdrawable switching device, after being inserted into the withdrawable part rack, can be held in the withdrawable part rack at least in a connected position or a non-connected position, having a spindle for lowering and raising the withdrawable switching device relative to the withdrawable part rack, having a crank (1) for operating the spindle, having a first side wall (2) for laterally holding and/or guiding the withdrawable switching device in the withdrawable part rack, wherein the first side wall (2) has, on its front face (3), a crank opening (4) for guiding the crank (1) through the first side wall (2) to the spindle,
**characterized**
**in that** a guide link (80) is provided, the said guide link being mounted such that it can move between a locking position (AR) and a non-locking position (NA) within the first side wall (2), wherein the guide link (80) is designed to support at least two switching actuators (60, 61, 62) such that they can move, in that an unlocking lever (90) is arranged such that it is mounted such that it can move between a starting position (AUS) and an end position (END) within the first side wall (2), it being possible for the said unlocking lever to be operated by the crank (1), which can be inserted into the interior of the first side wall (2) through the crank opening (4), for moving the guide link (80) from the locking position (AR) to the non-locking position (NA), wherein the unlocking lever (90) is designed and can be brought into operative contact with the guide link (80) in such a way that, after the guide link (80) is moved to the non-locking position (NA), the unlocking lever (90) is moved to an end position (END) and, after the crank (1) is removed from the interior of the first side wall (2), the unlocking lever (90) is moved automatically back to the starting position (AUS).

2. Withdrawable part rack according to Claim 1,
**characterized**
**in that** a lever spring (91) is provided, the said lever spring exerting a force on the unlocking lever (90) in the direction of the starting position (AUS) in the end position (END) of the unlocking lever (90).

3. Withdrawable part rack according to Claim 1 or 2,
**characterized**
**in that** the guide link (80) has a guide projection (82) on which the unlocking lever (90) can act in order to move the guide link (80) from the locking position (AR) to the non-locking position (NA).

4. Withdrawable part rack according to Claim 3,
**characterized**
**in that** the guide projection (82) and the unlocking lever (90) are designed in such a way that, after the crank (1) is removed from the interior of the first side wall (2), the unlocking lever (90) can, on account of the force of the lever spring (91), be guided along the guide projection (82) for the purpose of returning to the starting position (AUS).

5. Withdrawable part rack according to at least one of the preceding Claims 3 and 4,
**characterized**
**in that** the guide projection (82) has at least one bevel (83) for the unlocking lever (90) to act on.

6. Withdrawable part rack according to at least one of the preceding claims,
**characterized**
**in that** the unlocking lever (90) has a stop (92) for stopping the crank (1).

7. Withdrawable part rack according to at least one of the preceding claims,
**characterized**
**in that** the unlocking lever (90) is mounted such that it can be rotated about a rotation axis (96) within the first side wall (2).

8. Withdrawable part rack according to at least one of the preceding Claims 2 to 6,
**characterized**
**in that** the unlocking lever (90) is mounted such that it can move in one plane, and is held such that it can be pivoted with respect to the plane.

9. Withdrawable part rack according to at least one of the preceding claims,
**characterized**
**in that** the guide link (80) is designed to hold the switching actuators (60, 61, 62) and to enable movement of the switching actuators (60, 61, 62), wherein each switching actuator (60, 61, 62) is prestressed with respect to the guide link (80) by a spring-elastic element (67, 68, 69).

10. Withdrawable part rack according to at least one of the preceding claims,
**characterized**
**in that** a holding element (100) is arranged such that it can be mounted in a movable manner within the first side wall (2), it being possible for the said holding element to be moved parallel to the insertion direction of the crank (1) by the crank (1), and the said holding element being designed to hold the guide link (80) in the non-locking position (NA) of the guide link (80), wherein the holding element (100) is designed in such a way that it can release the guide link (80) in the event of a movement in the direction of the insertion direction of the crank (1), so that the guide link (80) is moved from the non-locking position (NA) to the locking position (AR).

11. Withdrawable part rack according to Claim 10,
**characterized**
**in that** a stop element (101) is provided on the guide link (80), the said stop element being designed to block the rotary movement of the crank (1) in the locking position (AR) of the guide link (80).

12. Withdrawable part rack according to Claim 11,
**characterized**
**in that** a screw element (110) of the crank (1) and the guide link (80) are designed and can be brought into operative contact with one another in such a way that, in the non-locking position (NA) of the guide link (80), the screw element (110) and the crank (1) can be rotated due to non-engagement of the stop element (101) into the screw element (110), and in that, in the locking position (AR) of the guide link (80), the screw element (110) and the crank (1) cannot be rotated due to engagement of the stop element (101) into the screw element (110).

13. Withdrawable part rack according to at least one of the preceding claims,
**characterized**
**in that** a position sensor (15) for determining the positions of the withdrawable switching device within the withdrawable part rack is provided, in that, in the locking position (AR) of the guide link (80), the switching actuators (60, 61, 62) bear against the position sensor (15) in a prestressed manner, in that the position sensor (15) has a cutout (17) through which one of the switching actuators (60, 61, 62) can be guided when the withdrawable switching device is in the non-connected position, the connected position or a test position within the first side wall (2) of the withdrawable part rack.

14. Withdrawable part rack according to Claim 13,
**characterized**
**in that** the switching actuators (60, 61, 62) are designed to operate an indicator device (50) of the withdrawable part rack, wherein, when a first switching actuator (60) is guided through the cutout (17) in the position sensor (15), the indicator device (50) is operated by the first switching actuator (60) to indicate the non-connected position, wherein, when a second switching actuator (62) is guided through the cutout (17) in the position sensor (15), the indicator device (50) is operated by the second switching actuator (62) to indicate the connected position, and, possibly when a third switching actuator (61) is guided through the cutout (17) in the position sensor (15), the indicator device (50) is operated by the third switching actuator (61) to indicate a test position.

15. Withdrawable part rack according to at least one of the preceding Claims 13 and 14,
**characterized**
**in that** the position sensor (15) can be prestressed by a position sensor spring element (18).

16. Withdrawable part rack according to at least one of the preceding Claims 13 to 15,
**characterized**
**in that** the position sensor (15) has a blocking projection (19) which is designed to block the movement of a first close-off device (20) of the withdrawable part rack.

17. Unit comprising a withdrawable part rack and an electrical withdrawable switching device, in particular a withdrawable circuit breaker, wherein the withdrawable switching device has a housing and a switching mechanism, and wherein the withdrawable part rack is designed to receive the electrical withdrawable switching device,
**characterized**
**in that** the withdrawable part rack is designed according to at least one of the preceding claims.

## Revendications

1. Cadre amovible pour un appareil de commutation électrique amovible, notamment un disjoncteur amovible, comprenant un socle adaptateur pour le raccordement électrique de l'appareil de commutation amovible à une alimentation électrique, ledit appareil de commutation amovible, après avoir été introduit dans le cadre amovible, étant susceptible d'être maintenu dans celui-ci au moins dans une position connectée ou une position non connectée, une broche pour abaisser et lever l'appareil de commutation amovible par rapport au cadre amovible, une manivelle (1) pour actionner la broche, une première paroi latérale (2) pour retenir et/ou guider latéralement l'appareil de commutation amovible dans le cadre amovible, ladite première paroi latérale (2) comportant sur sa face frontale (3) une ouverture (4) pour manivelle, permettant de faire passer la manivelle (1) à travers la première paroi latérale (2) vers la broche,
**caractérisé en ce qu'**il est prévu une coulisse de guidage (80), montée de manière mobile à l'intérieur de la première paroi latérale (2) entre une position de blocage (AR) et une position de non-blocage (NA), ladite coulisse de guidage (80) étant conçue pour le montage mobile d'au moins deux actionneurs de commutation (60, 61, 62), **en ce qu'**un levier de déblocage (90) est montée de manière mobile à l'intérieur de la première paroi latérale (2) entre une position initiale (AUS) et une position finale (END), lequel levier est susceptible d'être actionné par la manivelle (1) pouvant être introduite, à travers l'ouverture (4), à l'intérieur de la première paroi latérale (2), pour faire passer la coulisse de guidage (80) de la position de blocage (AR) dans la position de non-blocage (NA), ledit levier de déblocage (90) étant conçu de telle manière, et pouvant être amené en contact actif avec la coulisse de guidage (80), que, après avoir fait passer la coulisse de guidage (80) dans la position de non-blocage (NA), le levier de déblocage (90) est amené dans une position finale (END) et, une fois la manivelle (1) retirée de l'intérieur de la première paroi latérale (2), le levier de déblocage (90) est ramené automatiquement dans la position initiale (AUS).

2. Cadre amovible selon la revendication 1,
**caractérisé en ce qu'**il est prévu un ressort de levier (91) qui, dans la position finale (END) du levier de déblocage (90), exerce une force sur le levier de déblocage (90) en direction de la position initiale (AUS).

3. Cadre amovible selon la revendication 1 ou 2,
**caractérisé en ce que** la coulisse de guidage (80) comporte une protubérance de guidage (82) sur laquelle peut s'appliquer le levier de déblocage (90) pour faire passer la coulisse de guidage (80) de la position de blocage (AR) dans la position de non-blocage (NA).

4. Cadre amovible selon la revendication 3,
**caractérisé en ce que** la protubérance de guidage (82) et le levier de déblocage (90) sont conçus de telle manière que, une fois la manivelle (1) retirée de l'intérieur de la première paroi latérale (2), le levier de déblocage (90), grâce à la force du ressort de levier (91), peut être guidé le long de la protubérance de guidage (82) pour revenir à la position initiale (AUS).

5. Cadre amovible selon au moins une des revendications précédentes 3 ou 4,
**caractérisé en ce que** la protubérance de guidage (82) comporte au moins un chanfrein (83) pour l'application du levier de déblocage (90).

6. Cadre amovible selon au moins une des revendications précédentes,
**caractérisé en ce que** le levier de déblocage (90) comporte une butée (92) pour arrêter la manivelle (1).

7. Cadre amovible selon au moins une des revendications précédentes,
**caractérisé en ce que** le levier de déblocage (90) est monté à rotation autour d'un axe de rotation (96) à l'intérieur de la première paroi latérale (2).

8. Cadre amovible selon au moins une des revendications précédentes 2 à 6,
**caractérisé en ce que** le levier de déblocage (90) est monté de manière mobile dans un plan et est maintenu dans ledit plan de façon à pouvoir pivoter.

9. Cadre amovible selon au moins une des revendications précédentes,
**caractérisé en ce que** la coulisse de guidage (80) est conçue pour tenir les actionneurs de commutation (60, 61, 62) et pour libérer le mouvement des actionneurs de commutation (60, 61, 62), chacun desdits actionneurs de commutation (60, 61, 62) étant précontraint par un élément élastique à ressort (67, 68, 69) par rapport à la coulisse de guidage (80).

10. Cadre amovible selon au moins une des revendications précédentes,
**caractérisé en ce qu'**un élément de retenue (100), monté de manière mobile, est disposé à l'intérieur de la première paroi latérale (2), élément qui est susceptible d'être déplacé par la manivelle (1) parallèlement au sens d'introduction de la manivelle (1) et qui est conçu pour retenir la coulisse de guidage (80) dans la position de non-blocage de la coulisse de guidage (80), ledit élément de retenue (100) étant réalisé de manière à pouvoir libérer la coulisse de guidage lors d'un déplacement en direction du sens d'introduction de la manivelle (1), de telle sorte que la coulisse de guidage (80) passe de la position de non-blocage (NA) dans la position de blocage (AR).

11. Cadre amovible selon la revendication 10,
**caractérisé en ce qu'**un élément de butée (101) est prévu sur la coulisse de guidage (80), élément qui est conçu pour bloquer le mouvement de rotation de la manivelle (1) dans la position de blocage (AR) de la coulisse de guidage (80).

12. Cadre amovible selon la revendication 11,
**caractérisé en ce qu'**un élément à vis (110) de la manivelle (1) et la coulisse de guidage (80) sont conçus de telle manière, et peuvent être amené en contact actif l'un par rapport à l'autre, que lorsque la coulisse de guidage (80) est en position de non-blocage (NA), l'élément à vis (110) et la manivelle (1) peuvent tourner du fait que l'élément de butée (101) n'est pas engagé dans l'élément à vis (110), et lorsque la coulisse de guidage (80) est en position de blocage (AR), l'élément à vis (110) et la manivelle (1) ne peuvent pas tourner du fait que l'élément de butée (101) est engagé dans l'élément à vis (110).

13. Cadre amovible selon au moins une des revendications précédentes,
**caractérisé en ce qu'**il est prévu un détecteur de position (15) pour déterminer les positions de l'appareil de commutation amovible à l'intérieur du cadre amovible, **en ce qu'**en position de blocage (AR) de la coulisse de guidage (80), les actionneurs de commutation (60, 61, 62) sont appliqués, avec précontrainte, contre le détecteur de position (15), **en ce que** le détecteur de position (15) comporte un évidement (17) à travers lequel un des actionneurs de commutation (60, 61, 62) est susceptible d'être introduit lorsque l'appareil de commutation amovible se trouve dans la position de non-connexion, la position de connexion ou une position de test à l'intérieur de la première paroi latérale (2) du cadre amovible.

14. Cadre amovible selon la revendication 13,
**caractérisé en ce que** les actionneurs de commutation (60, 61, 62) sont conçus pour actionner un moyen d'affichage (50) du cadre amovible, sachant que lors de l'introduction d'un premier actionneur de commutation (60) à travers l'évidement (17) du détecteur de position (15), le moyen d'affichage (50) est actionné par ledit premier actionneur de commutation (60) pour afficher la position de non-connexion, lors de l'introduction d'un deuxième actionneur de commutation (62) à travers l'évidement (17) du détecteur de position (15), le moyen d'affichage (50) est actionné par ledit deuxième actionneur de commutation (62) pour afficher la position de connexion et, le cas échéant, lors de l'introduction d'un troisième actionneur de commutation (61) à travers l'évidement (17) du détecteur de position (15), le moyen d'affichage (50) est actionné par ledit troisième actionneur de commutation (61) pour afficher une position de test.

15. Cadre amovible selon au moins une des revendications précédentes 13 ou 14,
**caractérisé en ce que** le détecteur de position (15) peut être précontraint par un élément élastique (18) de détecteur de position.

16. Cadre amovible selon au moins une des revendications précédentes 13 à 15,
**caractérisé en ce que** le détecteur de position (15) comporte une protubérance de blocage (19), conçue pour bloquer le déplacement d'un premier moyen d'arrêt (20) du cadre amovible.

17. Ensemble formé d'un cadre amovible et d'un appareil de commutation électrique amovible, notamment d'un disjoncteur amovible, l'appareil de commutation amovible comprenant un boîtier et un mécanisme de commutation, et le cadre amovible étant conçu pour recevoir l'appareil de commutation électrique amovible,
**caractérisé en ce que** le cadre amovible est réalisé selon au moins une des revendications précédentes.
